(19) Europäisches Patentamt / European Patent Office / Office européen des brevets

(11) **EP 4 311 251 B1**

(12) **EUROPEAN PATENT SPECIFICATION**

(45) Date of publication and mention
of the grant of the patent:
**26.11.2025  Bulletin 2025/48**

(21) Application number: **23722479.5**

(22) Date of filing: **04.04.2023**

(51) International Patent Classification (IPC):
*H04N 23/54* (2023.01)      *H02K 41/035* (2006.01)
*G03B 3/10* (2021.01)       *G03B 5/00* (2021.01)
*G03B 15/05* (2021.01)      *G03B 30/00* (2021.01)

(52) Cooperative Patent Classification (CPC):
**H02K 41/0356; G03B 3/10; G03B 5/00;
G03B 15/05; G03B 30/00; H04N 23/54;**
G03B 2205/0069

(86) International application number:
**PCT/KR2023/004484**

(87) International publication number:
**WO 2023/239034 (14.12.2023 Gazette 2023/50)**

(54) **CAMERA MODULE AND ELECTRONIC DEVICE COMPRISING SAME**

KAMERAMODUL UND ELEKTRONISCHE VORRICHTUNG DAMIT

MODULE DE CAMÉRA ET DISPOSITIF ÉLECTRONIQUE LE COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.06.2022  KR 20220070583
04.08.2022  KR 20220097307**

(43) Date of publication of application:
**24.01.2024  Bulletin 2024/04**

(73) Proprietor: **Samsung Electronics Co., Ltd.
Suwon-Si, Gyeonggi-do 16677 (KR)**

(72) Inventors:
• **HWANG, Youngjae
Suwon-si, Gyeonggi-do 16677 (KR)**

• **OH, Jooyoung
Suwon-si, Gyeonggi-do 16677 (KR)**

(74) Representative: **HGF
HGF Limited
1 City Walk
Leeds LS11 9DX (GB)**

(56) References cited:
EP-A1- 3 798 724        WO-A1-2020/251205
JP-A- 2007 080 305      KR-A- 20210 022 501
KR-A- 20210 045 202     KR-A- 20220 016 536
KR-A- 20220 059 089     KR-B1- 101 908 037
US-A1- 2022 094 853     US-B2- 8 049 815

**Description**

BACKGROUND

1. Field

The disclosure relates to a camera module and an electronic device including the same.

2. Description of Related Art

An electronic device including a camera may provide a photographing function. For example, the electronic device may output an image obtained from the camera to a display, and may obtain a captured image from the camera as a shutter is operated.

US2022/094853 A1 discloses a camera that may use a multi-axis image sensor shifting system to implement both autofocus and optical image stabilization. The multi-axis image sensor shifting system may include a flexure suspension arrangement and an actuator. The flexure suspension arrangement may include an inner frame, an intermediate frame, and an outer frame. The actuator may include one or more magnets, and two sets of one or more coils attached respectively to some of the frames of the flexure suspension arrangement.

KR20220059089 A discloses a camera module that includes a lens barrel movably provided in a housing in a first direction parallel to an optical axis; and a focus adjusting unit facing a magnet provided on one side of the lens barrel and including first and second coils disposed in the first direction, where at least one of the first coil and the second coil may have a smaller thickness than the other portion in a portion adjacent to the neighboring coil.

SUMMARY

In order to implement an auto focus function and/or an image stabilization function, a camera module includes an actuator for adjusting a position of a lens or an image sensor. For example, the actuator is a voice coil motor formed using an electromagnetic force and may include a magnet or coil. Thrust may be generated when a current flows through the coil in a magnetic field generated by the magnet. Also, in order to stably implement the auto focus function and/or image stabilization function, an actuator having improved thrust may be required.

According to embodiments, a camera module with improved thrust generated by the actuator and an electronic device including the camera module may be provided.

According to an embodiment, an electronic device according to claim 1 is provided.

According to an example, a camera module 400 disposed on an electronic device 301 includes a fixed part 430 that is in a fixed position relative to the electronic device 301, a movable part 440 including a lens or an image sensor and configured to move relative to the fixed part 430, and an actuator 500 including a magnet unit 510 and a coil unit 520 disposed to face each other and configured to move the movable part 440 relative to the fixed part 430. The coil unit 520 may include a first coil layer 521 including a coil having a first coil turn cross-sectional area $S_1$, and a second coil layer 522 stacked on the first coil layer 521 and positioned relatively farther from the magnet unit 510 than the first coil layer 521 and including a coil having a second coil turn cross-sectional area $S_2$ larger than the first coil turn cross-sectional area $S_1$.

According to an example, an electronic device 301 includes a housing 310 forming an exterior of the electronic device 301, and a camera module 400 at least a portion of which is disposed inside the housing 310. The camera module 400 may include a fixed part 430 that is in a fixed position relative to the electronic device 301, a movable part 440 connected to a lens or an image sensor and configured to move relative to the fixed part 430, and an actuator 500 including a magnet unit 510 and a coil unit 520 disposed to face each other and configured to move the movable part 440 relative to the fixed part 430, the coil unit 520 may include a plurality of coil layers 521 and 522 stacked on each other, each of the coil layers 521 and 522 may include a printed circuit board (PCB) 5211 or 5221 and a coil pattern 5212 or 5222 formed on the PCB 5211 or 5221, and the plurality of coil layers 521 and 522 is formed to have an increasing or at least the same coil turn cross-sectional area $S_1$ or $S_2$ of the coil pattern 5212 or 5222, as the coil layers become far from the magnet unit 510.

The actuator of the camera module according to various embodiments may increase a total thrust generated from the actuator by increasing a current density in a portion with a relatively strong magnetic field of a magnet.

The actuator of the camera module according to various embodiments may reduce any increase in resistance of the entire coil by reducing the current density in a portion with a relatively weak magnetic field of the magnet.

The effects of the camera module and the electronic device including the same according to various embodiments may not be limited to the above-mentioned effects, and other unmentioned effects may be clearly understood from the following description by one of ordinary skill in the art.

BRIEF DESCRIPTION OF THE DRAWINGS

The above and other aspects, features, and advantages of certain embodiments of the present disclosure will be more apparent from the following detailed description, taken in conjunction with the accompanying drawings, in which:

FIG. 1 is a block diagram illustrating an electronic device in a network environment according to a generic example;
FIG. 2 is a block diagram illustrating a camera module according to a generic example;
FIG. 3A is a front perspective view of an electronic device according to a generic example;
FIG. 3B is a rear perspective view of an electronic device according to a generic example;
FIG. 4A is a perspective view of a camera module according to a generic example;
FIG. 4B is an exploded perspective view of a camera module according to an embodiment;
FIG. 5 is a schematic cross-sectional view of an actuator according to a comparative example;
FIG. 6 is a schematic cross-sectional view of an actuator according to an embodiment;
FIG. 7 is a schematic cross-sectional view of an actuator according to an embodiment; and
FIG. 8 is a schematic front view of an actuator according to an embodiment.

DETAILED DESCRIPTION

Hereinafter, an embodiment will be described in detail with reference to the accompanying drawings. When describing an embodiment with reference to the accompanying drawings, like reference numerals refer to like elements and a repeated description related thereto will be omitted. In the rest of the description, unless explicitly indicated as "embodiment(s) according to the claimed invention", any mention of the terms embodiment, example, aspect or implementation, may include some but not all features as literally defined in the claims and is present only for illustration purposes.

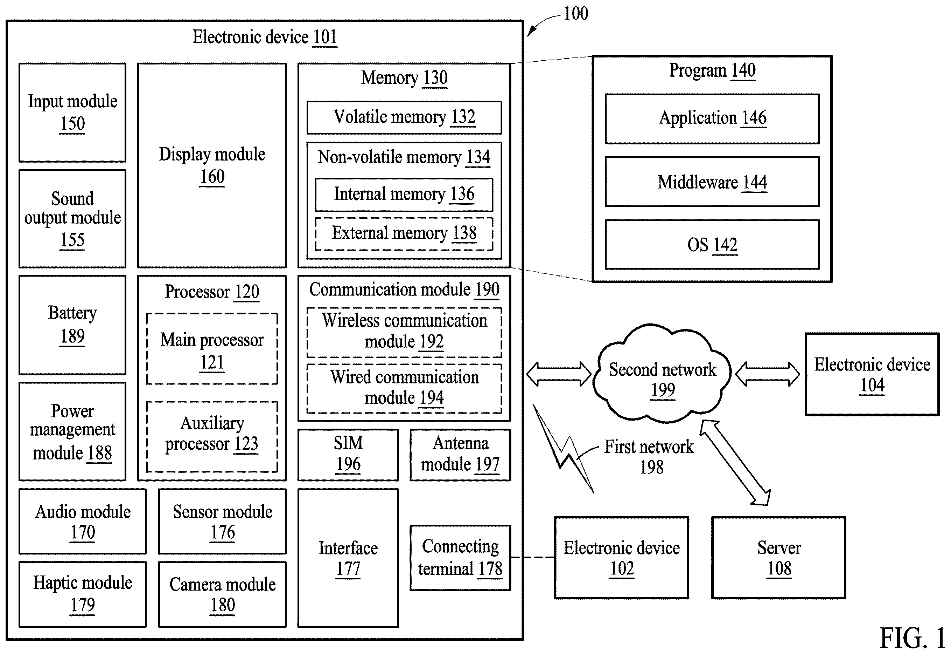

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a nonvolatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, or the projector. According to an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mm Wave antenna module. According to an embodiment, the mm Wave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least portion of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

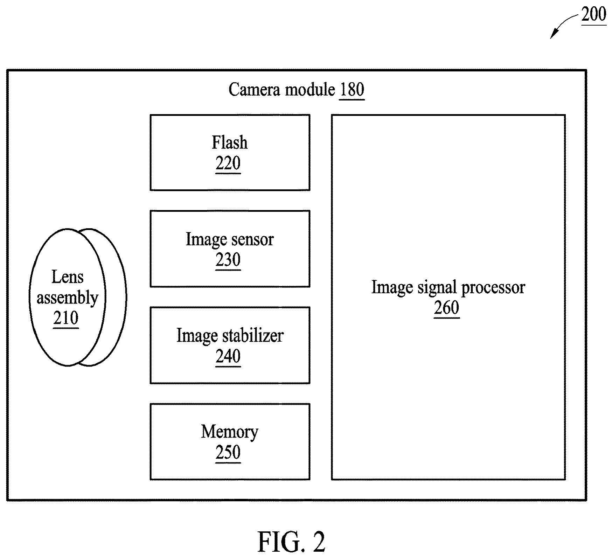

FIG. 2 is a block diagram 200 illustrating the camera module 180 according to an embodiment. Referring to FIG. 2, the camera module 180 may include a lens assembly 210, a flash 220, an image sensor 230, an image stabilizer 240, a memory 250 (e.g., a buffer memory), or an ISP 260. The lens assembly 210 may collect light emitted or reflected from an object which is a target of which an image is to be captured. The lens assembly 210 may include one or more lenses. According to an embodiment, the camera module 180 may include a plurality of lens assemblies 210. In this case, the camera module 180 may constitute, for example, a dual camera, a 360-degree camera, or a spherical camera. A portion of the lens assemblies 210 may have the same lens properties (e.g., an angle of view, a focal length, an auto focus, an f number, or an optical zoom), or at least one of the lens assemblies 210 may have one or more lens properties that are different from those of other lens assemblies. The lens assembly 210 may include, for example, a wide-angle lens or a telephoto lens.

The flash 220 may emit light to be used to enhance light emitted or reflected from the object. According to an embodiment, the flash 220 may include one or more light emitting diodes (LEDs) (e.g., a red-green-blue (RGB) LED, a white LED, an infrared (IR) LED, or an ultraviolet (UV) LED), or a xenon lamp. The image sensor 230 may obtain an image corresponding to the object by converting light emitted or reflected from the object and transmitted through the lens assembly 210 into an electrical signal. According to an embodiment, the image sensor 230 may include, for example, one image sensor selected from among image sensors having different properties, such as, for example, an RGB sensor, a black and white (BW) sensor, an IR sensor, or a UV sensor, a plurality of image sensors having the same property, or a plurality of image sensors having different properties. Each image sensor included in the image sensor 230 may be implemented using, for example, a charged coupled device (CCD) sensor or a complementary metal-oxide-semiconductor (CMOS) sensor.

The image stabilizer 240 may move at least one lens included in the lens assembly 210 or the image sensor 230 in a specific direction, or control an operation characteristic (e.g., adjust the read-out timing) of the image sensor 230, in response to a movement of the camera module 180 or an electronic device 101 including the camera module 180. This may compensate for at least a portion of a negative effect of the movement on an image to be captured. According to an embodiment, the image stabilizer 240 may sense such a movement of the camera module 180 or the electronic device 101 using a gyro sensor (not shown) or an acceleration sensor (not shown) disposed inside or outside the camera module 180. According to an embodiment, the image stabilizer 240 may be implemented as, for example, an optical image stabilizer. The memory 250 may temporarily store at least a portion of the image obtained through the image sensor 230 for a subsequent image processing operation. For example, when image acquisition is delayed by a shutter or a plurality of images is obtained at a high speed, an obtained original image (e.g., a Bayer-patterned image or a high-resolution image) may be stored in the memory 250 and a copy image (e.g., a low-resolution image) corresponding the original image may be previewed through the display module 160. Subsequently, when a specified condition (e.g., a user input or a system command) is satisfied, at least a portion of the original image stored in the memory 250 may be obtained and processed by, for example, the ISP 260. According to an embodiment, the memory 250 may be configured as at least a part of the memory 130 or as a separate memory operated independently of the memory 130.

The ISP 260 may perform one or more image processing operations on an image obtained through the image sensor 230 or an image stored in the memory 250. The image processing operations may include, for example, depth map generation, three-dimensional (3D) modeling, panorama generation, feature point extraction, image synthesis, or image compensation (e.g., noise reduction, resolution adjustment, brightness adjustment, blurring, sharpening, or softening). Additionally or alternatively, the ISP 260 may control at least one of the components (e.g., the image sensor 230) included in the camera module 180. For example, the ISP 260 may control an exposure time, a read-out timing, and the like. The image processed by the ISP 260 may be stored again in the memory 250 for further processing, or be provided to an external component (e.g., the memory 130, the display module 160, the electronic device 102, the electronic device 104, or the server 108) of the camera module 180. According to an embodiment, the ISP 260 may be configured as at least a part of the processor 120 or as a separate processor operated independently of the processor 120. When the ISP 260 is configured as a processor separate from the processor 120, at least one image processed by the ISP 260 may be displayed as it is without a change or be displayed through the display module 160 after additional image processing is performed by the processor 120.

According to an embodiment, the electronic device 101 may include a plurality of camera modules 180 having different properties or functions. In this case, for example, at least one of the camera modules 180 may be a wide-angle camera, and at least another one of the camera modules 180 may be a telephoto camera. Similarly, at least one of the

6

camera modules 180 may be a front camera, and at least another one of the camera modules 180 may be a rear camera.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that an embodiment of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "1st", "2nd", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the present disclosure as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

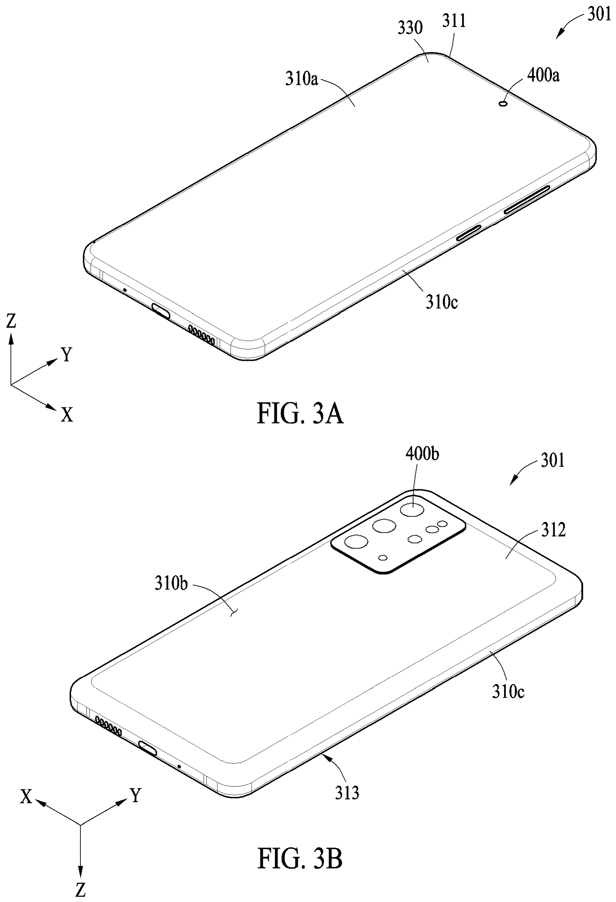

FIG. 3A is a front perspective view of an electronic device according to embodiments, and FIG. 3B is a rear perspective view of the electronic device according to embodiments.

Referring to FIGS. 3A and 3B, an electronic device 301 (e.g., the electronic device 101 of FIG. 1) according to an embodiment may include a housing 310, a display 330 (e.g., the display module 160 of FIG. 1), and camera modules 400a and 400b (e.g., the camera module 180 of FIG. 1).

The housing 310 may form an exterior of the electronic device 301. The housing 310 may form a front surface 310a (e.g., a first surface), a rear surface 310b (e.g., a second surface), and a side surface 310c (e.g., a third surface) surrounding an inner space between the front surface 310a and the rear surface 310b. For example, the housing 310 may include a first plate 311 (e.g., a front plate), a second plate 312 (e.g., a rear plate), and a side member 313 (e.g., a side bezel structure).

In an embodiment, the front surface 310a may be formed by the first plate 311 of which at least a portion is substantially transparent. For example, the first plate 311 may include a polymer plate or a glass plate including at least one coating layer. In an embodiment, the rear surface 310b may be formed of a substantially opaque second plate 312. For example, the second plate 312 may be formed of coated or tinted glass, ceramic, polymer, metal (e.g., aluminum, stainless steel, or magnesium), or a combination thereof. The side surface 310C may be coupled to the first plate 311 and the second plate 312 and may be formed by the side member 313 including metal and/or polymer. In an embodiment, the second plate 312 and the side member 313 may be integrally and seamlessly formed. In an embodiment, the second plate 312 and the side member 313 may be formed of substantially the same material (e.g., aluminum).

In an embodiment, the side member 313 may surround at least a portion of the inner space between the front surface 310a and the rear surface 310b. A support member (not shown) may be disposed in the inner space of the housing 310. For example, the support member may be connected to the side member 313 or may be formed integrally with the side member 313. The support member may form an arrangement space of components of the electronic device 301. For example, the display 330 and/or the camera modules 400a and 400b may be fixedly connected to the support member.

In an embodiment, the electronic device 301 may include the display 330 (e.g., the display module 160 of FIG. 1). In an embodiment, the display 330 may be disposed on the front surface 310a. In an embodiment, the display 330 may be exposed through at least a portion of the front plate 311. In an embodiment, the display 330 may have a shape that is substantially the same as a shape of an outer edge of the first plate 311. In an embodiment, an edge of the display 330 may substantially coincide with the outer edge of the first plate 311.

In an embodiment, at least a portion of the camera modules 400a and 400b may be disposed inside the housing 310. In an embodiment, the camera modules 400a and 400b may be disposed to be visually exposed through the front surface 310a and/or the rear surface 310b of the housing 310. In an embodiment, the camera modules 400a and 400b may be disposed on a back surface (e.g., a surface facing a -z and/or +z direction) of at least one of the front surface 310a and/or the rear surface 310b of the housing 310 so as to face at least one of the front surface 310a and/or the rear surface 310b. For example, the camera modules 400a and 400b may not be visually exposed and may include a hidden under display camera (UDC). The camera modules 400a and 400b shown in FIGS. 3A and 3B are merely an example and positions, shapes, sizes, and/or number of the camera modules 400a and 400b are not limited thereto.

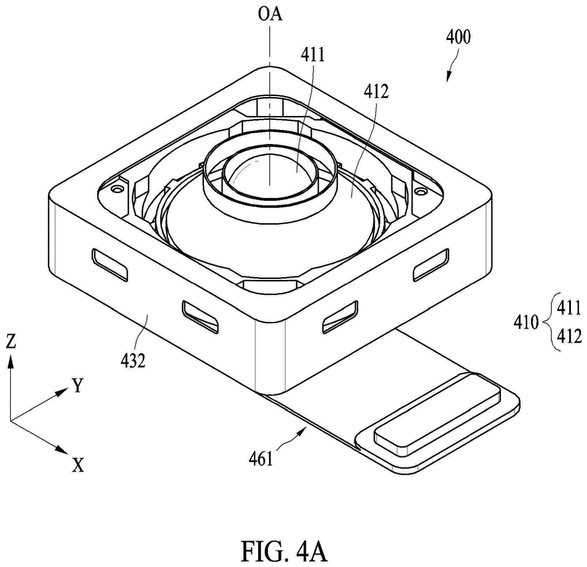

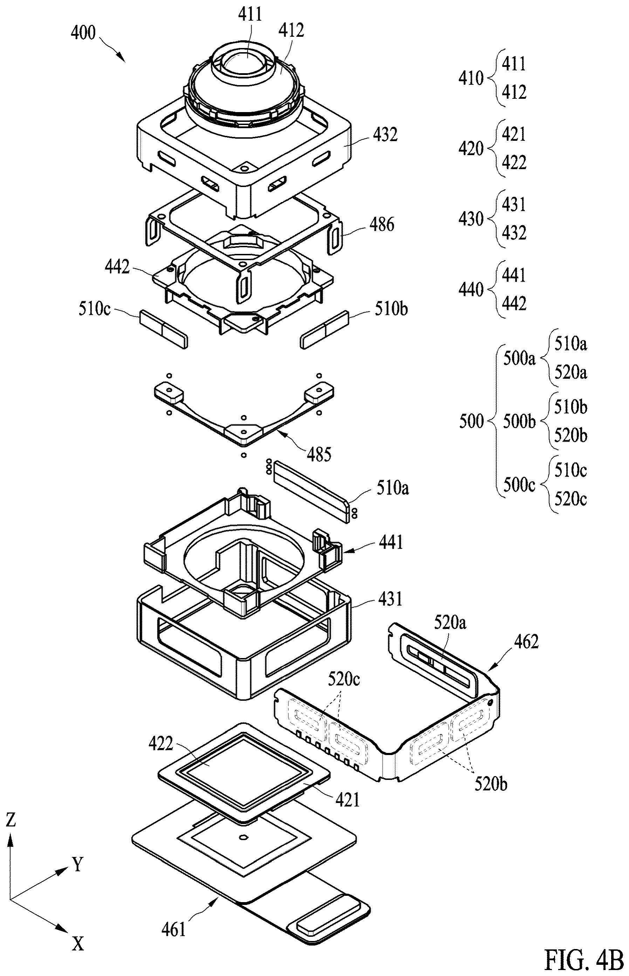

FIG. 4A is a perspective view of a camera module according to an embodiment. FIG. 4B is an exploded perspective view of a camera module according to an embodiment.

Referring to FIGS. 4A and 4B, a camera module 400 (e.g., the camera module 180 of FIG. 1) according to an embodiment may include a lens assembly 410 (e.g., the lens assembly 210 of FIG. 2), a sensor assembly 420, a fixed part 430, a movable part 440, an actuator 500 (e.g., the image stabilizer 240 of FIG. 2), a PCB 461, a flexible PCB 462, a middle guide 485, and a stopper frame 486.

In an embodiment, the lens assembly 410 may include a lens 411 and a lens barrel 412. The lens 411 may have an optical axis OA. At least one lens 411 may be provided. The lens barrel 412 may at least partially enclose the lens 411.

In an embodiment, the sensor assembly 420 may include a circuit board 421 and an image sensor 422 (e.g., the image sensor 230 of FIG. 2). The image sensor 422 may be positioned on the circuit board 421. The image sensor 422 may be positioned to be substantially aligned with the optical axis OA of the lens 411.

In an embodiment, the fixed part 430 may be a component having a fixed (i.e. stationary) position relative to the housing 310 among the components of the camera module 400. For example, the fixed part 430 may be fixedly disposed on an electronic device (e.g., the electronic device 301 of FIG. 3A) such that it does not move relative to the housing 310. The fixed part 430 may include a first camera housing 431 and a second camera housing 432. The first camera housing 431 may provide a space in which various components are disposed. For example, the first camera housing 431 may accommodate at least partially the lens assembly 410, the sensor assembly 420, the movable part 440, the actuator 500, the PCB 461, the flexible PCB 462, the middle guide 485, and/or the stopper frame 486. The second camera housing 432 may be configured to at least partially surround the first camera housing 431. The second camera housing 432 may be formed of any appropriate material to have a shielding function.

In an embodiment, the movable part 440 may be a component whose position is able to move relative to other components among the components of the camera module 400 and/or the electronic device. For example, the movable part 440 may be moved relative to the fixed part 430. In an embodiment, the lens assembly 410 (at least the lens 411) may be connected to the movable part 440, and the sensor assembly 420 (at least the image sensor 422) may be connected to the fixed part 430 such that the lens assembly 410 is movable relative to the sensor assembly 420. For example, the movable part 440 may include a first carrier 441 and a second carrier 442. The first carrier 441 and/or the second carrier 442 may carry the lens 411 and the lens barrel 412 and may be positioned inside the first camera housing 431. For example, the first carrier 441 may be relatively movable with respect to at least the first camera housing 431, and the second carrier 442 may be relatively movable with respect to at least the first carrier 441. However, this is merely an example, and the connection relationship of the movable part 440 is not limited thereto. For example, the sensor assembly 420 (at least the image sensor 422) may be connected to the movable part 440, and the lens assembly 410 (at least the lens 411) may be connected to the fixed part 430 in order to allow the lens assembly 410 to be movable relative to the sensor assembly 420.

In an embodiment, the actuator 500 may relatively move the movable part 440 with respect to the fixed part 430. At least one actuator 500 may be provided. For example, the actuator 500 may include a first actuator 500a, a second actuator 500b, and a third actuator 500c. For example, the first actuator 500a, the second actuator 500b, and the third actuator 500c may implement movement in a z direction, x direction, and y direction, respectively. However, this is merely an example, and the number of actuators 500 and a moving direction thereof are not limited thereto. For example, the first actuator 500a, the second actuator 500b, and the third actuator 500c may implement movement in a z direction, y direction, and x direction, respectively.

In an embodiment, the actuators 500a, 500b, and 500c may include magnet units 510a, 510b, and 510c and coil units 520a, 520b, and 520c, respectively. Each of the magnet units 510a, 510b, and 510c may be disposed to face each of corresponding coil units 520a, 520b, and 520c respectively so as to be coupled electromagnetically in a pairwise manner i.e. the coils units are positioned within the magnetic field of their respective magnet units. The magnet units 510a, 510b, and 510c and the coil units 520a, 520b, and 520c may generate an electromagnetic force (e.g., Lorentz force) by the electromagnetic coupling.

In an embodiment, each of the magnet units 510a, 510b, and 510c may be directly or indirectly disposed on the movable part 440 so that they do not move relative to the moveable part 440 or a part thereof. For example, the first magnet unit 510a may be positioned on one surface (e.g., +y-direction surface) of the first carrier 441. The second magnet unit 510b may be positioned on one surface (e.g., +x-direction surface) of the second carrier 442. The third magnet unit 510c may be positioned on the another surface (e.g., -y-direction surface) of the second carrier 442.

In an embodiment, each of the coil units 520a, 520b, and 520c may be directly or indirectly disposed on the fixed part 430 so that they do not move relative to the fixed part 430 or a part thereof. For example, each of the coil units 520a, 520b, and 520c may be disposed along an inner side surface of the flexible PCB 462 connected to the fixed part 430. For example, the first coil unit 520a may be disposed on a first surface (e.g., an inner side surface oriented in the +y direction) of the flexible PCB 462 to face the first magnet unit 510a, to be electromagnetically coupled to the first magnet unit 510a. The second coil unit 520b may be disposed on a second surface (e.g., an inner side surface oriented in the +x direction) of the flexible PCB 462 to face the second magnet unit 510b, to be electromagnetically coupled to the second magnet unit 510b. The third coil unit 520c may be disposed on a third surface (e.g., an inner side surface oriented in the -y direction) of the flexible PCB 462 to face the third magnet unit 510c, to be electromagnetically coupled to the third magnet unit 510c. However, this is merely an example, and the number of magnet units 510a, 510b, and 510c and the coil units 520a, 520b, and 520c and/or arrangement thereof are not limited thereto. For example, the magnet units 510a, 510b, and 510c may be directly or indirectly disposed on the fixed part 430, and the coil units 520a, 520b, and 520c may be directly or indirectly disposed on the movable part 440.

In an embodiment, the PCB 461 may be configured to connect the circuit board 421 and/or other components. For example, the camera module 400 may be electrically connected to an electronic device (e.g., the electronic device 301 of FIG. 3A) through the PCB 461.

In an embodiment, the flexible PCB 462 may be disposed to surround at least a portion (e.g., a plurality of side surfaces) of the first carrier 441. The flexible PCB 462 may be connected to the fixed part 430 so that a position thereof is relatively fixed. The flexible PCB 462 may supply a current to the coil units 520a, 520b, and 520c.

In an embodiment, the middle guide 485 may be positioned between the first carrier 441 and the second carrier 442. The middle guide 485 may guide (e.g., a ball guide) relative movement between the first carrier 441 and the second carrier 442.

In an embodiment, the stopper frame 486 may be configured to restrict the movements of the first carrier 441 and the second carrier 442 in one direction (e.g., the z direction).

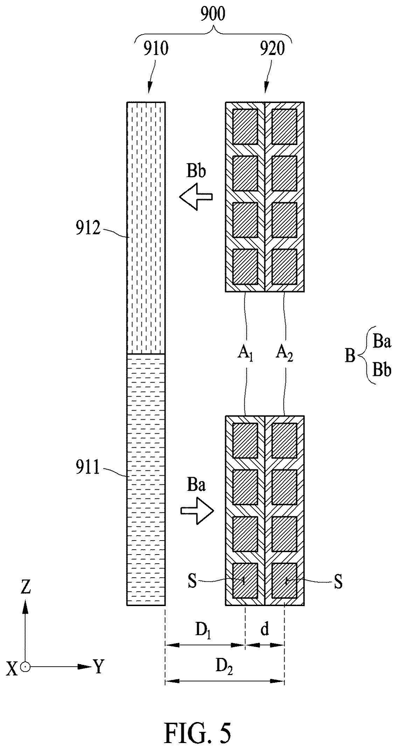

FIG. 5 is a schematic cross-sectional view of an actuator according to a comparative example. FIG. 5 is schematically illustrated for convenience of description and does not limit the position, shape, size, and/or number of each component.

Referring to FIG. 5, an actuator 900 according to a comparative example may include a magnet unit 910 and a coil unit 920. The magnet unit 910 and the coil unit 920 may be disposed to face each other either partially or fully. For example, at least a portion Ba of a magnetic field B generated by the magnet unit 910 may be formed in a direction (e.g., the +y direction) from a first pole 911 toward the coil unit 920, and at least a portion Bb thereof may be formed in a direction (e.g., the -y direction) from the coil unit 920 toward a second pole 912. In the coil unit 920, a current may flow in a direction (e.g., the +/-x direction) substantially perpendicular to at least the magnetic field B. The magnet unit 910 and the coil unit 920 may be electromagnetically coupled to each other to generate an electromagnetic force (e.g., the Lorentz force). The force F generated between the magnet unit 910 and the coil unit 920 may be calculated by $F = B \times L \times I \times n$. Here, B represents a magnitude of a magnetic field (e.g. B), I represents a magnitude of a current (e.g. that flowing in coil unit 920), L represents a length of a coil (e.g. the coil unit 920) perpendicular to a magnetic field, and n represents the number of turns of the coil (e.g. the coil unit 920).

In the comparative example, since the coil unit 920 has a thickness (e.g., a y-direction thickness) in a direction (e.g., the y direction) of the magnetic field B, a partial region $A_1$ may be positioned to be relatively closer to the magnet unit 910 and another region $A_2$ may be positioned to be relatively farther from the magnet unit 910. For convenience of description, as shown in FIG. 5, a half region relatively close to the magnet unit 910 is referred to as a first region $A_1$, and the other half area is referred to as a second region $A_2$. For example, at least some coils of the coil unit 920 may be disposed in the first region $A_1$, and the remaining coils of the coil unit 920 may be disposed in the second region $A_2$. When a distance between the magnet unit 910 and the first region $A_1$ is defined as $D_1$ and a distance between the magnet unit 910 and the second region $A_2$ is defined as $D_2$, $D_2 = D_1 + d$ may be represented. Here, d may refer to a central distance between the first region $A_1$ and the second region $A_2$. Meanwhile, since the magnitude of the magnetic field is inversely proportional to the square of the distance, the magnitude of the magnetic field B generated by the magnet unit 910 may be different in the first region $A_1$ and the second region $A_2$. When the magnitude of the magnetic field B in the first region $A_1$ is defined as $B_1$, $B_1$ is inversely proportional to the square of $D_1$ (that is, $B_1 \propto \dfrac{1}{D_1^2}$). When the magnitude of the magnetic field B in the second region $A_2$ is defined as $B_2$, $B_2$ is inversely proportional to the square of $D_2$ (that is, $B_2 \propto \dfrac{1}{D_2^2} = \dfrac{1}{(D_1+d)^2}$).

In the comparative example, the coil unit 920 may have the form in which coils having the same cross-sectional area S are repeatedly wound or arranged. In other words, the cross-sectional area S is the cross-sectional area of an individual turn of the coils i.e. the cross-sectional area of a coil turn. The number of coil turns n in the first region $A_1$ and the second region $A_2$ may be the same, for example, four in FIG. 5. In the first region $A_1$ and the second region $A_2$, lengths L of coils substantially perpendicular to the magnetic field B may be equal to each other. Since the number of turns n and the cross-sectional area S of the coils are the same in the first and second regions $A_1$ and $A_2$, coil resistance R may be the same in the first and second regions $A_1$ and $A_2$. Resistance $R_t$ of the entire coil unit 920 may be 2R, which is the sum of coil resistances in the first and second regions $A_1$ and $A_2$. An available current $I_{max}$ that may be applied to the coil unit 920 may be calculated as V/2R, where V is the applied voltage. This is summarized in Table 1 below.

Table 1

| Classification | Distance | Cross-sectional area | Number of turns | Resistance | Available current |
|---|---|---|---|---|---|
| First region $A_1$ | $D_1$ | S | n | R | |
| Second region $A_2$ | $D_1$ + d | S | n | R | $I_{max}$ = V/2R |
| Coil unit 920 | - | - | - | 2R | |

If the lengths of coils substantially perpendicular to the magnetic field B in the first and second regions $A_1$ and $A_2$ are the same, which is L, and currents applied to the first and second regions $A_1$ and $A_2$ are the same, which is I, forces $F_1$ and $F_2$ generated from the first and second regions $A_1$ and $A_2$, respectively, are calculated as below.

$$F_1 = B_1 \times L \times I \times n \propto \frac{1}{D_1^2} \times L \times I \times n$$

$$F_2 = B_2 \times L \times I \times n \propto \frac{1}{(D_1+d)^2} \times L \times I \times n$$

Referring to the above equation, it is confirmed that the force $F_1$ generated from the first region $A_1$ is greater than the force $F_2$ generated from the second region $A_2$ due to a difference in distance from the magnet unit 910. The force F generated from the entire coil unit 920 may be calculated as the sum of $F_1$ and $F_2$.

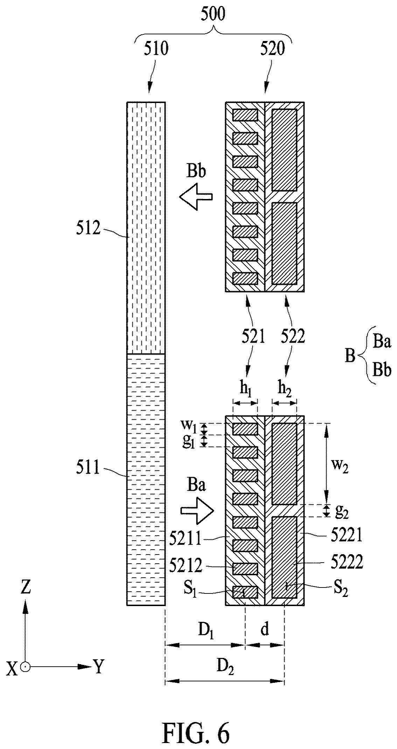

FIG. 6 is a schematic cross-sectional view of an actuator according to an embodiment. FIG. 6 is schematically illustrated for convenience of description and does not limit the position, shape, size, and/or number of each component.

Referring to FIG. 6, an actuator 500 (e.g., the actuator 500 of FIG. 4B) according to an embodiment may include a magnet unit 510 (e.g., the magnet units 510a, 510b, and 510c of FIG. 4B) and a coil unit 520 (e.g., the coil units 520a, 520b, and 520c of FIG. 4B). The magnet unit 510 and the coil unit 520 may be disposed to face each other either partially or fully and electromagnetically coupled to each other i.e. at least some of the coil of the coil unit 520 is perpendicular to the magnetic field generated by the magnet unit 510.

In an embodiment, the magnet unit 510 may include a permanent magnet but may also be an electromagnet. For example, a first pole 511 and a second pole 512 of the magnet unit 510 may be disposed along the z direction. At least a portion Ba of a magnetic field B generated by the magnet unit 510 may be formed in a direction (e.g., the +y direction) from the first pole 511 toward the coil unit 520, and at least a portion Bb thereof may be formed in a direction (e.g., the -y direction) from the coil unit 520 toward the second pole 512. Meanwhile, this is merely an example, and the direction of the pole of the magnet unit 510 may be variously arranged according to the type of the actuator 500. For example, as in the second magnet unit 510b or the third magnet unit 510c of FIG. 4B, the first pole 511 and the second pole 512 of the magnet unit 510 are disposed substantially in a horizontal direction (e.g., the y direction or the x direction). It will be obvious to one of ordinary skill in the art that, even when the first pole 511 and the second pole 512 of the magnet unit 510 are disposed in a substantially horizontal direction (e.g., the y direction or the x direction), the structure described with reference to FIG. 6 is applicable in the same manner.

In an embodiment, a current may flow through the coil unit 520 in a direction substantially perpendicular to at least the magnetic field B (e.g., +/-x direction). The magnet unit 510 and the coil unit 520 may be electromagnetically coupled to each other to generate an electromagnetic force (e.g., the Lorentz force).

In an embodiment, the coil unit 520 may have a form in which coils are repeatedly wound or disposed i.e. have multiple coil turns. For example, the coil unit 520 may be a wound coil or a coil printed on a PCB. Hereinafter, for convenience of description, a case in which the coil unit 520 is a coil printed on a PCB will be described. Although the drawings illustrate that the coil has a quadrangular cross-section, this is for convenience of description and diagrams, the shape of the cross-section of the coil is not limited thereto, and the cross-section of the coil may be formed in various ways. For example, the coil may have a circular, elliptical, or polygonal cross section.

In an embodiment according to the claimed invention, the coil unit 520 may include a plurality of coil layers 521 and 522, which may also be referred to as coil portions. The coil unit 520 includes a first coil layer 521 and a second coil layer 522. The first coil layer 521 and the second coil layer 522 are stacked and electrically connected to each other. The first coil layer 521 is positioned relatively close to the magnet unit 510, and the second coil layer 522 is positioned relatively further from the magnet unit 510 than the first coil layer 521. However, this is an example, and the number of coil layers included in the coil unit 520 is not limited thereto.

In an embodiment according to the claimed invention, the first coil layer 521 may include a first PCB 5211 and a first coil pattern 5212. For example, referring to FIG. 6, the first PCB 5211 may be disposed along the xz plane. The first coil pattern 5212 may be formed by being printed on the first PCB 5211 in a coil shape. The first coil pattern 5212 is formed to have a first coil turn cross-sectional area $S_1$.

In an embodiment according to the claimed invention, the second coil layer 522 may include a second PCB 5221 and a second coil pattern 5222. For example, referring to FIG. 6, the second PCB 5221 may be disposed along the xz plane. The second coil pattern 5222 may be formed by being printed on the second PCB 5221 in a coil shape. The second coil pattern 5222 is formed to have a second coil turn cross-sectional area $S_2$. The second coil pattern 5222 may be electrically connected to the first coil pattern 5212. For example, the second coil pattern 5222 may be electrically connected to the first coil pattern 5212 through a via. However, the coil patterns 5212 and 5222 are not limited to being formed on PCBs, for example, the coil patterns may be formed from wire windings that are supported by an alternative substrate. Furthermore, the stacking of the first coil layer 521 and the second coil layer 522 does not exclude one or more additional layers being present between the first coil layer 521 and the second coil layer 522.

In an embodiment, the cross-sectional area $S_2$ ($h_2 \times w_2$) of the second coil pattern 5222 is larger than the cross-sectional area $S_1$ ($h_1 \times w_1$) of the first coil pattern 5212. That is, the second cross-sectional area $S_2$ of a turn of the second coil pattern 5222 may be larger than the first cross-sectional area $S_1$ of a turn of the first coil pattern 5212. For example, a coil of the first coil pattern 5212 has a first width $w_1$ and a first height $h_1$, and a coil of the second coil pattern 5222 has a second width $w_2$ and a height $h_2$, the second width $w_2$ may be greater than the first width $w_1$, and the first height $h_1$ and the second height $h_2$ may be substantially the same. In this case, the first height $h_1$ and the second height $h_2$ may be a maximum height at which the coil patterns 5212 and 5222 may be formed on the PCBs 5211 and 5221. However, this is merely an example, and a size relationship between the coil widths $w_1$ and $w_2$ and/or the coil heights $h_1$ and $h_2$ of the first coil pattern 5212 and/or the second coil pattern 5222 is not limited thereto. For example, the size relationship between the coil widths $w_1$ and $w_2$ and/or the coil heights $h_1$ and $h_2$ of the first coil pattern 5212 and/or the second coil pattern 5222 may be set variously within a range where the cross-sectional area $S_2$ of the second coil pattern 5222 is formed to be larger than the cross-sectional area $S_1$ of the first coil pattern 5212. Meanwhile, the cross-sectional area of the coil shown in the drawing is exaggerated for convenience of description and diagrams, and thus, it should be noted that the cross-sectional area of the coil is not limited by the drawing. For example, the height $h_1$ of the first coil pattern 5212 may be approximately 35 um. For example, a pitch ($w_1 + g_1$) between two adjacent first coil patterns 5212 may be approximately 22 um.

In an embodiment, when the sizes of the first PCB 5211 and the second PCB 5212 are substantially the same, the cross-sectional area $S_2$ of the second coil pattern 5222 is larger than the cross-sectional area $S_1$ of the first coil pattern 5212, and thus, a number of coil turns $n_1$ of the first coil layer 521 may be greater than a number of coil turns $n_2$ of the second coil layer 522. For example, as shown in FIG. 6, the cross-sectional area $S_2$ of the second coil pattern 5222 is four times larger than the cross-sectional area $S_1$ of the first coil pattern 5212, and thus, the number of coil turns $n_1$ of the first coil layer 521 may be four times greater than the number of coil turns $n_2$ of the second coil layer 522. For example, a coil gap $g_1$ of the first coil pattern 5212 may be substantially the same as a coil gap $g_2$ of the second coil pattern 5222. In this case, each of the coil gaps $g_1$ and $g_2$ may be a minimum gap at which the coil patterns 5212 and 5222 may be most densely formed on the PCBs 5211 and 5221. However, this is merely an example, and the size relationship of the coil gaps $g_1$ and $g_2$ of the first coil pattern 5212 and/or the second coil pattern 5222 is not limited thereto. For example, the size relationship between the coil gaps $g_1$ and $g_2$ of the first coil pattern 5212 and/or the second coil pattern 5222 may be set variously within a range in which the number of coil turns $n_1$ of the first coil layer 521 is formed to be greater than the number of coil turns $n_2$ of the second coil layer 522. Meanwhile, the number of coil turns shown in the drawing is for convenience of description and diagrams, and thus, it should be noted that the number of coil turns is not limited by the drawing.

Hereinafter, a thrust F' (i.e. movement force) generated by the actuator 500 according to an embodiment of FIG. 6 is compared with a thrust F generated by the actuator 900 according to a comparative example of FIG. 5.

It is assumed that a distance $D_1$ between the magnet unit 510 and the first coil layer 521 in FIG. 6 is the same as a distance $D_1$ between the magnet unit 910 and the first region $A_1$ in FIG. 5. It is assumed that the cross-sectional area $S_1$ of the first coil pattern 5212 in FIG. 6 is half of the cross-sectional area S of the coil of the first region $A_1$ in FIG. 5. As the cross-sectional area is reduced by half, the number of coil turns $n_1$ in the first coil layer 521 of FIG. 6 may be twice the number of coil turns n in the first region $A_1$ of FIG. 5. Since the magnitude of resistance is proportional to the length and inversely proportional to the cross-sectional area, coil resistance $R_1$ of the first coil layer 521 of FIG. 6 is four times the coil resistance R of the first region $A_1$ of FIG. 5.

It is assumed that a distance $D_2$ between the magnet unit 510 and the second coil layer 522 in FIG. 6 is the same as a distance $D_2$ between the magnet unit 910 and the second region $A_2$ in FIG. 5. It is assumed that the cross-sectional area $S_2$ of the second coil pattern 5222 in FIG. 6 is twice the cross-sectional area S of the coil of the second region $A_2$ in FIG. 5. As the cross-sectional area doubles, the number of coil turns $n_2$ in the second coil layer 522 of FIG. 6 may be half of the number of coil turns n in the second region $A_2$ of FIG. 5. Since the magnitude of resistance is proportional to the length and inversely proportional to the cross-sectional area, coil resistance $R_2$ of the second coil layer 522 of FIG. 6 is 1/4 times the coil resistance R of the second region $A_2$ of FIG. 5.

In an embodiment according to FIG. 6, resistance $R_t'$ of the entire coil unit 520 may be 4.25R, which is the sum of coil resistances in the first coil layer 521 and the second coil layer 522. The maximum current $I'_{max}$ that may be applied to the coil unit 520 may be calculated by V/4.25R. This is summarized as in Table 2 shown below.

Table 2

| Classification | Distance | Cross-sectional area | Number of turns | Resistance | Available current |
|---|---|---|---|---|---|
| First coil layer 521 | $D_1$ | S/2 | 2n | 4R | |
| Second coil layer 522 | $D_1$+d | 2S | n/2 | R/4 | $I'_{max}$ = V/4.25R |
| Coil unit 520 | - | - | - | 4.25R | |

If the lengths of coils substantially perpendicular to the magnetic field B in the first coil layer 521 and the second coil layer 522 are the same, which is L, and currents applied to the first coil layer 521 and the second coil layer 522 are the same, which is I, forces $F_1'$ and $F_2'$ generated from the first coil layer 521 and the second coil layer 522, respectively, are calculated as below.

$$F_1' = B_1 \times L \times I \times 2n \propto \frac{1}{D_1^2} \times L \times I \times 2n = 2F_1$$

$$F_2' = B_2 \times L \times I \times \frac{n}{2} \propto \frac{1}{(D_1+d)^2} \times L \times I \times \frac{n}{2} = \frac{F_2}{2}$$

Referring to the above equations, it may be confirmed that the force $F_1'$ generated in the first coil layer 521 of FIG. 6 increases twice the force $F_1$ generated in the first region $A_1$ of FIG. 5, and the force $F_2'$ generated in the second coil layer 522 of FIG. 6 is reduced by half of the force $F_2$ generated in the second region $A_2$ of FIG. 5. The force F' generated in the entire coil unit 520 of FIG. 6 may be calculated as the sum of F1' and F2'.

$$F' = F'_1 + F'_2 = 2F_1 + \frac{F_2}{2}$$

Referring to the above equation, it may be confirmed that the thrust is concentrated on the first coil layer 521. A magnitude $B_1$ of the magnetic field applied to the first coil layer 521 or the first region $A_1$ is greater than a magnitude $B_2$ of the magnetic field applied to the second coil layer 522 or the second region $A_2$. Therefore, the magnitude of the force $F_1'$ applied to the first coil layer 521 being doubled may affect the force F' applied to the entire coil unit 520 more significantly, compared to the magnitude of the force $F_2'$ applied to the second coil layer 522 being halved. Thus, the thrust F' generated by the actuator 500 of FIG. 6 may increase to be greater than the thrust F generated by the actuator 900 of FIG. 5. For example, as the coil unit 520 becomes thicker (that is, as d increases), the thrust F' generated by the actuator 500 of FIG. 6 may increase further than the thrust F generated by the actuator 900 of FIG. 5. In addition, as the thrust F' generated by the actuator 500 increases, the current consumed when driving the actuator 500 may be reduced.

Accordingly, by providing a lower cross-sectional area and thus an increased number of turns in a coil layer that is disposed in an area with relatively stronger magnetic field perpendicular to the coil layer compared to a coil layer disposed in an area with a relatively weaker magnetic field perpendicular to the coil layer, for a given voltage, the resulting force (i.e. F') generated by the coil unit can be increased compared to a coil unit in which the coil layers have an approximately equal cross-sectional area and number of turns.

Meanwhile, as the cross-sectional area $S_1$ of the coil in the first coil layer 521 is reduced and the number of coil turns $n_1$ increases, the coil resistance $R_1$ in the first coil layer 521 increases. Therefore, in order to compensate for a decrease in the available current $I'_{max}$ due to an increase in the total resistance $R_t'$ of the coil unit 520, the cross-sectional area $S_2$ is increased in the second coil layer 522 and the number of coil turns $n_2$ may be reduced. According to such a configuration, since the coil resistance $R_2$ is relatively reduced in the second coil layer 522, an increase in the total resistance $R_t'$ of the coil unit 520 may be reduced.

In an embodiment, the coil of the first coil layer 521 may be formed of a material having a lower resistance coefficient than that of the coil of the second coil layer 522. For example, the coil of the first coil layer 521 may be formed of an ultra-high conductive material (e.g., gold), and the coil of the second coil layer 522 may be formed of a high conductive material (e.g., copper). According to such a configuration, even if the cross-sectional area $S_1$ of the coil is reduced in the first coil layer 521 and the number of coil turns $n_1$ is increased, an increase in the coil resistance $R_1$ may be reduced in the first coil layer 521.

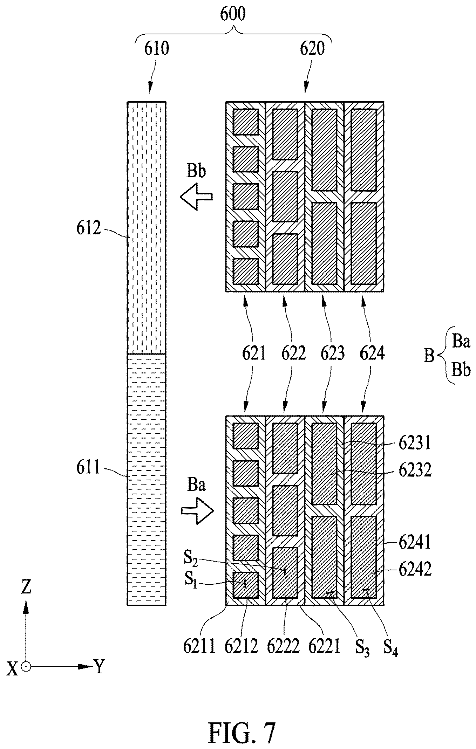

FIG. 7 is a schematic cross-sectional view of an actuator according to an embodiment. FIG. 7 is schematically illustrated for convenience of description and does not limit the position, shape, size, and/or number of each component.

Referring to FIG. 7, an actuator 600 (e.g., the actuator 500 of FIG. 4B) according to an embodiment may include a magnet unit 610 (e.g., the magnet units 510a, 510b, and 510c of FIG. 4B) and a coil unit 620 (e.g., the coil units 520a, 520b, and 520c of FIG. 4B).

In an embodiment, the magnet unit 610 may include a permanent magnet but is not limited to being a permanent magnet. For example, a first pole 611 and a second pole 612 of the magnet unit 610 may be disposed along the z direction. At least a portion Ba of a magnetic field B generated by the magnet unit 610 may be formed in a direction (e.g., the +y direction) from the first pole 611 toward the coil unit 620, and at least a portion Bb thereof may be formed in a direction (e.g., the -y direction) from the coil unit 620 toward the second pole 612. Meanwhile, this is merely an example, and the direction of the pole of the magnet unit 610 may be variously arranged according to the type of the actuator 600. For example, as in the second magnet unit 510b or the third magnet unit 510c of FIG. 4B, the first pole 611 and the second pole 612 of the magnet unit 610 are disposed substantially in a horizontal direction (e.g., the y direction or the x direction). It will be obvious to one of ordinary skill in the art that, even when the first pole 611 and the second pole 612 of the magnet unit 610 are disposed in a substantially horizontal direction (e.g., the y direction or the x direction), the structure described with reference to FIG. 7 is applicable in the same manner.

In an embodiment, a current may flow through the coil unit 620 in a direction substantially perpendicular to at least the magnetic field B (e.g., +/-x direction). The magnet unit 610 and the coil unit 620 may be disposed to face each other either partially or fully. The magnet unit 610 and the coil unit 620 may be electromagnetically coupled to each other to generate an electromagnetic force (e.g., the Lorentz force).

In an embodiment, the coil unit 620 may include a plurality of coil layers 621, 622, 623, and 624. For example, the coil unit 620 may include a first coil layer 621, a second coil layer 622, a third coil layer 623, and a fourth coil layer 624. The first coil layer 621, the second coil layer 622, the third coil layer 623, and the fourth coil layer 624 may be stacked to be electrically connected to each other. The first to fourth coil layers 621, 622, 623, and 624 may be disposed to be farther away from the magnet unit 610 in this order. That is, the first coil layer 621 may be disposed closest to the magnet unit 610 and the fourth coil layer 624 may be disposed farthest from the magnet unit 610. The first to fourth coil layers 621, 622, 623, and 624 may include PCBs 6211, 6221, 6231, and 6241 and coil patterns 6212, 6222, 6232, and 6242, respectively. However, this is an example, and the number of coil layers included in the coil unit 620 is not limited thereto nor is their arrangement limited to stacking and PCBs.

**In** an embodiment, for a plurality of coil layers (e.g., the first to fourth coil layers 621, 622, 623, and 624), a cross-sectional area of the coil may increase or may be formed to be at least the same, as the coil layers become far from the magnet unit 610 i.e. as the magnetic field strength perpendicular to the coil layers generated by the magnet unit decreases, which may for example be due to distance and/or relative orientation of the magnetic field and coil layer. For example, a cross-sectional area $S_2$ of a second coil pattern 6222 may be larger than a cross-sectional area $S_1$ of a first coil pattern 6212. A cross-sectional area $S_3$ of a third coil pattern 6232 may be larger than the cross-sectional area $S_2$ of the second coil pattern 6222. A cross-sectional area $S_4$ of a fourth coil pattern 6242 may be substantially the same as the cross-sectional area $S_3$ of the third coil pattern 6232.

In an embodiment, for the first to fourth coil layers 621, 622, 623, and 624, the number of coil turns may increase or may be formed to be at least the same, as the coil layers become close to the magnet unit 610. For example, a number of coil turns $n_1$ of the first coil layer 621 may be greater than a number of coil turns $n_2$ of the second coil layer 622. The number of coil turns $n_2$ of the second coil layer 622 may be greater than a number of coil turns $n_3$ of the third coil layer 623. The number of coil turns $n_3$ of the third coil layer 623 may be substantially the same as a number of coil turns $n_4$ of the fourth coil layer 624.

In an embodiment, the cross-sectional area $S_1$ of the first coil pattern 6212 may be approximately 1214 um$^2$, the cross-sectional area $S_2$ of the second coil pattern 6222 may be approximately 1359 um$^2$, and the cross-sectional area $S_3$ of the third coil pattern 6232 and the cross-sectional area $S_4$ of the fourth coil pattern 6242 may be approximately 1743 um$^2$. According to such a configuration, a total thrust may increase by approximately 14% and current consumption may decrease by approximately 8 mA, compared to a case where the cross-sectional areas of the coil of the four coil layers are the same as approximately 1596 um$^2$. However, the above numerical values are merely examples, and the cross-sectional area of the coil pattern is not limited thereto.

Meanwhile, in the description of the coil units 620 and 720 through FIGS. 6 and 7, it is described that the coil units 620 and 720 are formed in a coil pattern printed on the PCB, but the type of the coil units 620 and 720 is not limited thereto. For example, the coil units 620 and 720 may be winding-type coils, and a wire with a larger cross-sectional area (e.g., a thickness) may be used, as a coil unit is positioned further from the magnet units 610 and 710 relative to other coil units. In other words, wire thickness may vary as described above for the cross-sectional areas of the coil layers, and winding number may vary as described above for turn numbers of the coil layers.

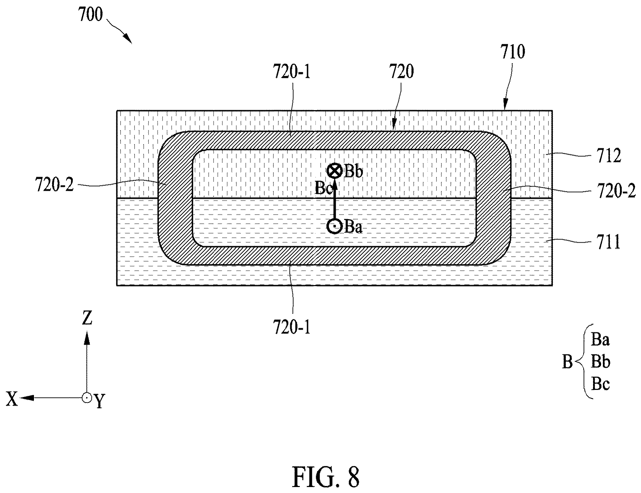

FIG. 8 is a schematic front view of an actuator according to an embodiment. FIG. 8 is schematically illustrated for convenience of description and does not limit the position, shape, size, and/or number of each component.

Referring to FIG. 8, an actuator 700 (e.g., the actuator 500 of FIG. 4B) according to an embodiment may include the magnet unit 710 (e.g., the magnet units 510a, 510b, and 510c of FIG. 4B) and the coil unit 720 (e.g., the coil units 520a, 520b, and 520c of FIG. 4B).

In an embodiment, the magnet unit 710 may generate a magnetic field B. For example, the magnet unit 710 may include a permanent magnet but is not so limited. A pole direction of the magnet unit 710 may be disposed along a direction (e.g., the z direction) substantially parallel to the coil unit 720. For example, as shown in FIG. 7, the coil unit 720 may be disposed on the xz plane, and a first pole 711 and a second pole 712 of the magnet unit 710 may be disposed along the z direction. The magnetic field B emitted from the first pole 711 of the magnet unit 710 may converge to the second pole 712. For example, at least a portion Ba of the magnetic field B generated by the magnet unit 710 may be formed in a direction (e.g., the +y direction) from the first pole 711 to the coil unit 720, at least a portion Bb thereof may be formed in a direction (e.g., the -y direction) from the coil unit 720 to the second pole 712, and at least a portion Bc may be formed in a direction (e.g., the +z direction) from the first pole 711 to the second pole 712. However, this is merely an example, and the direction of the magnetic field B generated by the magnet unit 710 is not limited thereto.

In an embodiment, a current may flow through the coil unit 720. The magnet unit 710 and the coil unit 720 may be electromagnetically coupled to each other to generate an electromagnetic force (e.g., the Lorentz force). The coil unit 720 may include a first coil portion 720-1 and a second coil portion 720-2. The first coil portion 720-1 may be a portion that is disposed to be substantially perpendicular to the magnetic fields Ba and Bb generated by the magnet unit 710, and the second coil portion 720-2 may be a portion that is disposed to be substantially parallel to the magnetic field Bc generated by the magnet unit 710. For example, based on FIG. 7, the first coil portion 720-1 may be a portion that is disposed in the x direction, and the second coil portion 720-2 may be a portion that is disposed in the z direction.

In an embodiment, since the first coil portion 720-1 is disposed to be substantially perpendicular to the magnetic fields Ba and Bb, a current flowing to the first coil portion 720-1 may be electromagnetically coupled to the magnetic fields Ba and Bb to generate an electromagnetic force (e.g., the Lorentz force). However, since the second coil portion 720-2 is disposed to be substantially parallel to the magnetic field Bc, the electromagnetic force (e.g., the Lorentz force) may not be generated in the second coil portion 720-2.

In an embodiment, the first coil portion 720-1 may have the first cross-sectional area $S_1$. The second coil portion 720-2 may have a cross-sectional area $S_1'$ larger than the first cross-sectional area $S_1$. Since the resistance is inversely proportional to the cross-sectional area, the second coil portion 720-2 may have resistance that is relatively lower than that of the first coil portion 720-1. According to such a configuration, the total resistance of the coil unit 720 may be reduced without affecting the total thrust generated by the actuator 700, and thus, the available current may be increased. The number of turns in the first coil portion 720-1 and the second coil portion 720-2 may also vary such that the number of turns in the first coil portion 720-1 is greater than the number of turns in the second coil portion 720-2. Alternatively, the coil unit 720 may be considered to be a single turn of a coil with a plurality of coil units 720 being used in an actuator.

The coil unit of Figure 8 may also be one or plurality of coil layers, each coil layer having the form of the coil unit of FIG. 8. Furthermore, when a plurality of coil layers are present, portions of coil layers further from the magnet may have a larger cross-sectional area relative to equivalent portions of coil layers closer to the magnet.

Accordingly, with reference to FIG. 8, by providing a larger cross-sectional area in a first portion of a coil unit that has a relatively weaker coupling to the magnet (e.g. due to the current path of the first portion of the coil being substantially parallel to the magnetic field of the magnetic) compared to a second portion of the coil unit that has a relatively stronger coupling to the magnetic field of the magnet (e.g. due to the current path of the second portion of the coil being substantially perpendicular to the magnetic field of the magnetic), the total resistance of the coil unit may be reduced without affecting the total thrust generated by the actuator, and thus, the available current may be increased for a given voltage.

More generally with respect to FIGS. 5, 6, 7, and 8, by having a larger coil turn cross-sectional area in a portion(s) of a coil unit that has a relatively weaker coupling to the magnet (e.g. a weaker magnetic field at the portion of the coil in a direction perpendicular to the portion of the coil) compared a portion(s) that has a relatively stronger coupling to the magnet (e.g. a stronger magnetic field at the portion of the coil in a direction perpendicular to the portion of the coil), the resulting force produced by the actuator for a given voltage or current may be increased. As described with reference to FIGS. 5, 6, and 7 the weaker/stronger magnetic field in a direction perpendicular to the portion of the coil unit may result from the distance of the portion from the magnet. With respect to FIG. 8 the weaker/stronger magnetic field in a direction perpendicular to the portion of the coil unit may result from the direction of the current path in the portion relative to the direction of the magnetic field at the portion. The variation is magnetic field strengthen/electromagnetic coupling between the coil/coil portions/coil unit/coil layer may also be a combination of the distance of the coil from the magnet unit and the orientation of the coil relative to the magnet and thus the magnetic field generated thereby.

The embodiments set out below and the features thereof may be combined in any appropriate manner to provide implementations that fall within the scope of the present disclosure.

In an embodiment, an electronic device 301 includes a housing 310 forming an exterior of the electronic device 301, and a camera module 400 at least a portion of which is disposed inside the housing 310. The camera module 400 may include a fixed part 430 that is in a fixed position relative to the electronic device 301, a movable part 440 connected to a lens or an image sensor and configured to move relative to the fixed part, and an actuator 500 including a magnet unit 510 and a coil unit 520 disposed to face each other and configured to move the movable part 440 relative to the fixed part 430, and the coil unit 520 may include a first coil layer 521 including a coil having a first coil turn cross-sectional area $S_1$, and a second coil layer 522 positioned relatively farther from the magnet unit 510 than the first coil layer 521 and including a coil having a second coil turn cross-sectional area $S_2$ larger than the first coil turn cross-sectional area $S_1$.

In an embodiment, a number of coil turns $n_1$ of the first coil layer 521 may be greater than a number of coil turns $n_2$ of the second coil layer 522.

In an embodiment, the first coil layer 521 may include a first PCB 5211, and a first coil pattern 5212 formed on the first PCB 5211, and the second coil layer 522 may include a second PCB 5221, and a second coil pattern 5222 formed on the second PCB 5221.

In an embodiment, a coil turn width $w_2$ of the second coil pattern 5222 may be greater than a coil turn width $w_1$ of the first coil pattern 5212.

In an embodiment, a coil turn gap $g_2$ of the second coil pattern 5222 may be the same as a coil turn gap $g_1$ of the first coil pattern 5212.

In an embodiment, a coil turn height $h_2$ of the second coil pattern 5222 may be the same as a coil turn height $h_1$ of the first coil pattern 5212.

In an embodiment, the first coil pattern 5212 and the second coil pattern 5222 are electrically connected through via.

In an embodiment, the coil unit 620 may further include a third coil layer 623 that is positioned relatively farther from the magnet unit 610 than the second coil layer 622 and includes a coil having a third coil turn cross-sectional area $S_3$ larger than the second coil turn cross-sectional area $S_2$.

In an embodiment, the number of coil turns $n_2$ of the second coil layer 622 may be greater than a number of coil turns $n_3$ of the third coil layer 623.

In an embodiment, the coil of the first coil layer 521 may be formed of a material having a lower resistance coefficient than a resistance coefficient of the coil of the second coil layer 522.

In an embodiment, the first coil layer 521 may include a first coil portion 720-1 having the first cross-sectional area $S_1$, and a second coil portion 720-2 having a cross-sectional area $S_1'$ larger than the first cross-sectional area $S_1$.

In an embodiment, the first coil portion 720-1 may be a portion disposed to be perpendicular to a magnetic field Ba or Bb generated by the magnet unit 510, and the second coil portion 720-2 may be a portion disposed to be parallel with a magnetic field Bc generated by the magnet unit 510.

In an embodiment according to the claimed invention, the first coil layer 521 and the second coil layer 522 are stacked to be electrically connected to each other.

In an embodiment, a thrust $F_1'$ generated by the first coil layer 521 may be greater than a thrust $F_2'$ generated by the second coil layer 522.

In an embodiment, coil resistance $R_2$ of the second coil layer 522 may be smaller than coil resistance $R_1$ of the first coil layer 521.

In an embodiment according to the claimed invention, a camera module 400 disposed on an electronic device 301 includes a fixed part 430 that is in a fixed position relative to the electronic device 301, a movable part 440 including a lens or an image sensor and configured to move relative to the fixed part 430, and an actuator 500 including a magnet unit 510 and a coil unit 520 disposed to face each other and configured to move the movable part 440 relative to the fixed part 430. The coil unit 520 may include a first coil layer 521 including a coil having a first coil turn cross-sectional area $S_1$, and a second coil layer 522 stacked on the first coil layer 521 positioned relatively farther from the magnet unit 510 than the first coil layer 521 and including a coil having a second coil turn cross-sectional area $S_2$ larger than the first coil turn cross-sectional area $S_1$.

In an embodiment, a number of coil turns $n_1$ of the first coil layer 521 may be greater than a number of coil turns $n_2$ of the second coil layer 522.

In an embodiment, the first coil layer 521 may include a first PCB 5211, and a first coil pattern 5212 formed on the first PCB 5211, and the second coil layer 522 may include a second PCB 5221, and a second coil pattern 5222 formed on the second PCB 5221.

In an embodiment, a coil turn width $w_2$ of the second coil pattern 5222 may be greater than a coil turn width $w_1$ of the first coil pattern 5221.

In an embodiment according to the claimed invention, an electronic device 301 includes a housing 310 forming an exterior of the electronic device 301, and a camera module 400 at least a portion of which is disposed inside the housing 310. The camera module 400 may include a fixed part 430 that is in a fixed position relative to the electronic device 301, a movable part 440 connected to a lens or an image sensor and configured to move relative to the fixed part 430, and an actuator 500 including a magnet unit 510 and a coil unit 520 disposed to face each other and configured to move the movable part 440 relative to the fixed part 430, the coil unit 520 may include a plurality of coil layers 521 and 522 stacked on each other, each of the coil layers 521 and 522 may include a PCB 5211 or 5221 and a coil pattern 5212 or 5222 formed on the PCB 5211 or 5221, and the plurality of coil layers 521 and 522 is formed to have an increasing or at least the same coil turn cross-sectional area $S_1$ or $S_2$ of the coil pattern 5212 or 5222, as the coil layers become far from the magnet unit 510.

**Claims**

1. An electronic device (301) comprising:

   a housing (310) forming an exterior of the electronic device (301); and
   a camera module (400), at least a portion of which is disposed inside the housing (310),
   wherein the camera module (400) comprises:

   a fixed part (430) that is in a fixed position relative to the electronic device (301);
   a movable part (440) connected to a lens (411) or to an image sensor (422) and configured to move relative to the fixed part (430); and
   an actuator (500, 600, 700) comprising a magnet unit (510, 610, 710) and a coil unit (520, 620, 720) disposed to face each other and configured to move the movable part (440) relative to the fixed part (430),

   wherein the coil unit (520, 620, 720) comprises:

   a first coil layer (521, 621) comprising a coil having a first coil turn cross-sectional area ($S_1$); and
   a second coil layer (522, 622) stacked on the first coil layer (521, 621), positioned relatively farther from the magnet unit (510, 610, 710) than the first coil layer (521, 621) and comprising a coil having a second coil turn cross-sectional area ($S_2$) larger than the first coil turn cross-sectional area ($S_1$).

2. The electronic device (301) of claim 1, wherein a number of coil turns of the first coil layer (521, 621) is greater than a number of coil turns of the second coil layer (522, 622).

3. The electronic device (301) of claims 1 or 2,

  wherein the first coil layer (521, 621) comprises a first printed circuit board, PCB, (5211, 6211), and a first coil pattern (5212, 6212) formed on the first PCB (5211, 6211), and
  wherein the second coil layer (522, 622) comprises a second PCB (5221, 6221), and a second coil pattern (5222, 6222) formed on the second PCB (5221, 6221).

4. The electronic device (301) of claim 3, wherein a coil turn width ($W_2$) of the second coil pattern (5222, 6222)is greater than a coil turn width ($W_1$) of the first coil pattern (5212, 6212).

5. The electronic device (301) of claims 3 or 4, wherein a coil turn gap ($g_2$) of the second coil pattern (5222, 6222) is the same as a coil turn gap ($g_1$) of the first coil pattern (5212, 6212).

6. The electronic device (301) of any of claims 3 to 5, wherein a coil turn height ($h_2$) of the second coil pattern (5222, 6222) is the same as a coil turn height (hi) of the first coil pattern (5212, 6212).

7. The electronic device (301) of any of claims 3 to 6, wherein the first coil pattern (5212, 6212) and the second coil pattern (5222, 6222) are electrically connected through a via.

8. The electronic device (301) of any of claims 1 to 7, wherein the coil unit (620) further comprises a third coil layer (623) that is positioned relatively farther from the magnet unit (610) than the second coil layer (622) and comprises a coil having a third coil turn cross-sectional area ($S_3$) larger than the second coil turn cross-sectional area ($S_2$).

9. The electronic device (301) of claim 8, wherein the number of coil turns of the second coil layer (622) is greater than a number of coil turns of the third coil layer (623).

10. The electronic device (301) of any preceding claim, wherein the coil of the first coil layer (521, 621) is formed of a material having a lower resistance coefficient than a resistance coefficient of the coil of the second coil layer (522, 622).

11. The electronic device (301) of claim 1, wherein the first coil layer (521, 621) comprises:

  a first coil portion (720-1) having the first cross-sectional area; and
  a second coil portion (720-2) having a cross-sectional area larger than the first cross-sectional area.

12. The electronic device (301) of claim 11,

  wherein the first coil portion (720-1) is a portion disposed to be perpendicular to a magnetic field (Bc) generated by the magnet unit (510, 610, 710), and
  wherein the second coil portion (720-2) is a portion disposed to be parallel with a magnetic field (Bc) generated by the magnet unit (510, 610, 710).

13. The electronic device (301) of any of claims 1 to 12, wherein the first coil layer (521, 621)) and the second coil layer (522, 622) are stacked to be electrically connected to each other.

14. The electronic device (301) of any preceding claim, wherein a thrust generated by the first coil layer (521) is greater than a thrust generated by the second coil layer (522).

15. The electronic device (301) of any preceding claim, wherein a coil resistance of the second coil layer (522, 622) is smaller than coil resistance of the first coil layer (521. 621).

**Patentansprüche**

1. Elektronische Vorrichtung (301), umfassend:

  ein Gehäuse (310), das eine Außenseite der elektronischen Vorrichtung (301) bildet; und
  ein Kameramodul (400), von dem zumindest ein Abschnitt innerhalb des Gehäuses (310) angeordnet ist, wobei das Kameramodul (400) Folgendes umfasst:

einen festen Teil (430), der in einer festen Position relativ zu der elektronischen Vorrichtung (301) ist;
einen bewegbaren Teil (440), der mit einer Linse (411) oder mit einem Bildsensor (422) verbunden und dazu konfiguriert ist, sich relativ zu dem festen Teil (430) zu bewegen; und
einen Aktor (500, 600, 700), der eine Magneteinheit (510, 610, 710) und eine Spuleneinheit (520, 620, 720) umfasst, die dazu angeordnet sind, einander zugewandt zu sein, und dazu konfiguriert sind, den bewegbaren Teil (440) relativ zu dem festen Teil (430) zu bewegen,
wobei die Spuleneinheit (520, 620, 720) Folgendes umfasst:

eine erste Spulenschicht (521, 621), die eine Spule umfasst, die eine erste Spulenwindungsquerschnittsfläche ($S_1$) aufweist; und
eine zweite Spulenschicht (522, 622), die auf der ersten Spulenschicht (521, 621) gestapelt ist, relativ weiter von der Magneteinheit (510, 610, 710) als die erste Spulenschicht (521, 621) positioniert ist und eine Spule umfasst, die eine zweite Spulenwindungsquerschnittsfläche ($S_2$) aufweist, die größer als die erste Spulenwindungsquerschnittsfläche ($S_1$) ist.

2. Elektronische Vorrichtung (301) nach Anspruch 1, wobei eine Anzahl an Spulenwindungen der ersten Spulenschicht (521, 621) größer als eine Anzahl an Spulenwindungen der zweiten Spulenschicht (522, 622) ist.

3. Elektronische Vorrichtung (301) nach Anspruch 1 oder 2,

wobei die erste Spulenschicht (521, 621) eine erste Leiterplatte, PCB, (5211, 6211) und ein erstes Spulenmuster (5212, 6212), das auf der ersten PCB (5211, 6211) gebildet ist, umfasst, und
wobei die zweite Spulenschicht (522, 622) eine zweite PCB (5221, 6221) und ein zweites Spulenmuster (5222, 6222), das auf der zweiten PCB (5221, 6221) gebildet ist, umfasst.

4. Elektronische Vorrichtung (301) nach Anspruch 3, wobei eine Spulenwindungsbreite ($W_2$) des zweiten Spulenmusters (5222, 6222) größer als eine Spulenwindungsbreite ($W_1$) des ersten Spulenmusters (5212, 6212) ist.

5. Elektronische Vorrichtung (301) nach Anspruch 3 oder 4, wobei ein Spulenwindungsspalt ($g_2$) des zweiten Spulenmusters (5222, 6222) der gleiche wie ein Spulenwindungsspalt ($g_1$) des ersten Spulenmusters (5212, 6212) ist.

6. Elektronische Vorrichtung (301) nach einem der Ansprüche 3 bis 5, wobei eine Spulenwindungshöhe ($h_2$) des zweiten Spulenmusters (5222, 6222) die gleiche wie eine Spulenwindungshöhe ($h_1$) des ersten Spulenmusters (5212, 6212) ist.

7. Elektronische Vorrichtung (301) nach einem der Ansprüche 3 bis 6, wobei das erste Spulenmuster (5212, 6212) und das zweite Spulenmuster (5222, 6222) elektrisch durch ein Durchgangsloch verbunden sind.

8. Elektronische Vorrichtung (301) nach einem der Ansprüche 1 bis 7, wobei die Spuleneinheit (620) ferner eine dritte Spulenschicht (623) umfasst, die relativ weiter von der Magneteinheit (610) als die zweite Spulenschicht (622) positioniert ist und eine Spule umfasst, die eine dritte Spulenwindungsquerschnittsfläche ($S_3$) aufweist, die größer als die zweite Spulenwindungsquerschnittsfläche ($S_2$) ist.

9. Elektronische Vorrichtung (301) nach Anspruch 8, wobei die Anzahl an Spulenwindungen der zweiten Spulenschicht (622) größer als eine Anzahl an Spulenwindungen der dritten Spulenschicht (623) ist.

10. Elektronische Vorrichtung (301) nach einem vorhergehenden Anspruch, wobei die Spule der ersten Spulenschicht (521, 621) aus einem Material gebildet ist, das einen niedrigeren Widerstandskoeffizienten als ein Widerstandskoeffizient der Spule der zweiten Spulenschicht (522, 622) aufweist.

11. Elektronische Vorrichtung (301) nach Anspruch 1, wobei die erste Spulenschicht (521, 621) Folgendes umfasst:

einen ersten Spulenabschnitt (720-1), der die erste Querschnittsfläche aufweist; und
einen zweiten Spulenabschnitt (720-2), der eine Querschnittsfläche aufweist, die größer als die erste Querschnittsfläche ist.

**12.** Elektronische Vorrichtung (301) nach Anspruch 11,

wobei der erste Spulenabschnitt (720-1) ein Abschnitt ist, der dazu angeordnet ist, senkrecht zu einem Magnetfeld (Bc) zu sein, das durch die Magneteinheit (510, 610, 710) erzeugt wird, und
wobei der zweite Spulenabschnitt (720-2) ein Abschnitt ist, der dazu angeordnet ist, parallel zu einem Magnetfeld (Bc) zu sein, das durch die Magneteinheit (510, 610, 710) erzeugt wird.

**13.** Elektronische Vorrichtung (301) nach einem der Ansprüche 1 bis 12, wobei die erste Spulenschicht (521, 621) und die zweite Spulenschicht (522, 622) gestapelt sind, um elektrisch miteinander verbunden zu sein.

**14.** Elektronische Vorrichtung (301) nach einem vorhergehenden Anspruch, wobei ein Schub, der durch die erste Spulenschicht (521) erzeugt wird, größer als ein Schub ist, der durch die zweite Spulenschicht (522) erzeugt wird.

**15.** Elektronische Vorrichtung (301) nach einem vorhergehenden Anspruch, wobei ein Spulenwiderstand der zweiten Spulenschicht (522, 622) kleiner als Spulenwiderstand der ersten Spulenschicht (521, 621) ist.

**Revendications**

**1.** Dispositif électronique (301) comprenant :

un boîtier (310) formant un extérieur du dispositif électronique (301) ; et
un module de caméra (400), dont au moins une portion est disposée à l'intérieur du boîtier (310),
dans lequel le module de caméra (400) comprend :

une partie fixe (430) qui est dans une position fixe par rapport au dispositif électronique (301) ;
une partie mobile (440) raccordée à une lentille (411) ou à un capteur d'image (422) et conçue pour se déplacer par rapport à la partie fixe (430) ; et
un actionneur (500, 600, 700) comprenant une unité d'aimant (510, 610, 710) et une unité de bobine (520, 620, 720) disposées en regard l'une de l'autre et conçues pour déplacer la partie mobile (440) par rapport à la partie fixe (430),
dans lequel l'unité de bobine (520, 620, 720) comprend :

une première couche de bobine (521, 621) comprenant une bobine ayant une première surface de section transversale de spire de bobine ($S_1$) ; et
une deuxième couche de bobine (522, 622) empilée sur la première couche de bobine (521, 621), positionnée relativement plus loin de l'unité d'aimant (510, 610, 710) que la première couche de bobine (521, 621) et comprenant une bobine ayant une deuxième surface de section transversale de spire de bobine ($S_2$) plus grande que la première surface de section transversale de spire de bobine ($S_1$).

**2.** Dispositif électronique (301) selon la revendication 1, dans lequel un nombre de spires de bobine de la première couche de bobine (521, 621) est supérieur à un nombre de spires de bobine de la deuxième couche de bobine (522, 622).

**3.** Dispositif électronique (301) selon la revendication 1 ou 2,

dans lequel la première couche de bobine (521, 621) comprend une première carte de circuit imprimé, PCB, (5211, 6211), et un premier motif de bobine (5212, 6212) formé sur la première PCB (5211, 6211), et
dans lequel la deuxième couche de bobine (522, 622) comprend une seconde PCB (5221, 6221), et un second motif de bobine (5222, 6222) formé sur la seconde PCB (5221, 6221),

**4.** Dispositif électronique (301) selon la revendication 3, dans lequel une largeur de spire de bobine ($W_2$) du second motif de bobine (5222, 6222) est supérieure à une largeur de spire de bobine ($W_1$) du premier motif de bobine (5212, 6212).

**5.** Dispositif électronique (301) selon la revendication 3 ou 4, dans lequel un entrefer de spires de bobine ($g_2$) du second motif de bobine (5222, 6222) est le même qu'un entrefer de spires de bobine ($g_1$) du premier motif de bobine (5212, 6212).

6. Dispositif électronique (301) selon l'une quelconque des revendications 3 à 5, dans lequel une hauteur de spire de bobine ($h_2$) du second motif de bobine (5222, 6222) est la même qu'une hauteur de spire de bobine ($h_1$) du premier motif de bobine (5212, 6212).

7. Dispositif électronique (301) selon l'une quelconque des revendications 3 à 6, dans lequel le premier motif de bobine (5212, 6212) et le second motif de bobine (5222, 6222) sont électriquement connectés par l'intermédiaire d'un trou d'interconnexion.

8. Dispositif électronique (301) selon l'une quelconque des revendications 1 à 7, dans lequel l'unité de bobine (620) comprend en outre une troisième couche de bobine (623) qui est positionnée relativement plus loin de l'unité d'aimant (610) que la deuxième couche de bobine (622) et comprend une bobine ayant une troisième surface de section transversale de spire de bobine ($S_3$) plus grande que la deuxième surface de section transversale de spire de bobine ($S_2$).

9. Dispositif électronique (301) selon la revendication 8, dans lequel un nombre de spires de bobine de la deuxième couche de bobine (622) est supérieur à un nombre de spires de bobine de la troisième couche de bobine (623).

10. Dispositif électronique (301) selon l'une quelconque des revendications précédentes, dans lequel la bobine de la première couche de bobine (521, 621) est formée d'un matériau ayant un coefficient de résistance inférieur à un coefficient de résistance de la bobine de la deuxième couche de bobine (522, 622).

11. Dispositif électronique (301) selon la revendication 1, dans lequel la première couche de bobine (521, 621) comprend :

une première portion de bobine (720-1) ayant la première surface de section transversale ; et
une seconde portion de bobine (720-2) ayant une surface de section transversale plus grande que la première surface de section transversale.

12. Dispositif électronique (301) selon la revendication 11,

dans lequel la première portion de bobine (720-1) est une portion disposée pour être perpendiculaire à un champ magnétique (Bc) généré par l'unité d'aimant (510, 610, 710), et
dans lequel la seconde portion de bobine (720-2) est une portion disposée pour être parallèle à un champ magnétique (Bc) généré par l'unité d'aimant (510, 610, 710),

13. Dispositif électronique (301) selon l'une quelconque des revendications 1 à 12, dans lequel la première couche de bobine (521, 621) et la deuxième couche de bobine (522, 622) sont empilées pour être électriquement connectées l'une à l'autre.

14. Dispositif électronique (301) selon l'une quelconque des revendications précédentes, dans lequel une poussée générée par la première couche de bobine (521) est supérieure à une poussée générée par la deuxième couche de bobine (522).

15. Dispositif électronique (301) selon l'une quelconque des revendications précédentes, dans lequel une résistance de bobine de la deuxième couche de bobine (522, 622) est inférieure à la résistance de bobine de la première couche de bobine (521, 621).

FIG. 1

_200_

| Camera module _180_ | |
|---|---|
| **Flash** <br> _220_ | |
| **Image sensor** <br> _230_ | **Image signal processor** <br> _260_ |
| **Image stabilizer** <br> _240_ | |
| **Memory** <br> _250_ | |

Lens assembly _210_

FIG. 2

FIG. 3A

FIG. 3B

FIG. 4A

FIG. 4B

FIG. 5

FIG. 6

FIG. 7

FIG. 8

**EP 4 311 251 B1**

**Patent documents cited in the description**

- US 2022094853 A1

- KR 20220059089 A